(19) Europäisches Patentamt

European Patent Office

Office européen des brevets

(11) **EP 3 234 353 B1**

(12) **FASCICULE DE BREVET EUROPEEN**

(45) Date de publication et mention de la délivrance du brevet:
**17.10.2018 Bulletin 2018/42**

(21) Numéro de dépôt: **15825853.3**

(22) Date de dépôt: **18.12.2015**

(51) Int Cl.:
*F03G 6/00* *(2006.01)*      *F28D 20/00* *(2006.01)*
*F28D 20/02* *(2006.01)*

(86) Numéro de dépôt international:
**PCT/IB2015/059791**

(87) Numéro de publication internationale:
**WO 2016/098075 (23.06.2016 Gazette 2016/25)**

(54) **DISPOSITIF DE STOCKAGE DESTINÉ À UNE INSTALLATION DE PRODUCTION D'ÉNERGIE THERMIQUE ET PROCÉDÉ D'UTILISATION**

SPEICHERVORRICHTUNG FÜR EIN THERMISCHES KRAFTWERK UND VERFAHREN ZUR VERWENDUNG DAVON

STORAGE DEVICE INTENDED FOR A THERMAL POWER PLANT AND METHOD FOR USING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2014 FR 1463011**

(43) Date de publication de la demande:
**25.10.2017 Bulletin 2017/43**

(73) Titulaire: **Commissariat à l'Énergie Atomique et aux Énergies Alternatives 75015 Paris (FR)**

(72) Inventeurs:
• **DEYDIER, Alexandre 38000 Grenoble (FR)**
• **COUTURIER, Raphaël 38360 Sassenage (FR)**
• **GARCIA, Pierre 38700 Corenc (FR)**

(74) Mandataire: **Gevers & Orès 41 avenue de Friedland 75008 Paris (FR)**

(56) Documents cités:
**WO-A2-2014/199394**      **US-A1- 2011 100 356**

**EP 3 234 353 B1**

**Description**

L'invention concerne le domaine de la production d'énergie thermique et notamment un procédé, suivant le préambule de la revendication 1, d'utilisation d'un dispositif de stockage destiné à des installations produisant cette énergie de façon intermittente, comme les centrales solaires thermodynamiques.

Ces centrales solaires thermodynamiques permettent de chauffer un fluide caloporteur (comme de l'eau, des sels fondus ou de la vapeur), de façon à entraîner un moteur thermique, tel qu'une turbine à vapeur, de façon à produire de l'électricité.

Pour ce type d'installations, il est connu de prévoir un système de stockage de chaleur de façon à lisser les variations dues à l'intermittence de la production et à augmenter leur facteur de capacité.

Dans le cas d'une centrale solaire thermodynamique, ces variations peuvent être dues à l'environnement extérieur, par exemple un passage nuageux ou un changement de saison. Par ailleurs, le facteur de capacité est défini comme le rapport entre la durée de fonctionnement de l'installation et l'ensoleillement disponible.

On peut notamment se référer à l'article « S. Rodat, A. Bruch, N. Dupassieux, N. El Mourchid, Unique Fresnel demonstrator including ORC and thermocline direct thermal storage: operating experience, International Conference on Concentrating Solar Power and Chemical Energy Systems, SolarPACES 2014 » qui décrit une centrale solaire associée à un système de stockage.

Un tel système de stockage est du type par chaleur sensible ou latente et il est ainsi capable de stocker et de restituer de la chaleur sous forme sensible ou latente sur de courtes durées, d'environ quelques heures.

Cependant, il arrive que l'installation soit arrêtée pendant une durée prolongée. C'est notamment le cas lorsque des opérations de maintenance sont réalisées ou lorsqu'advient une longue période de mauvais temps. Dans ce cas, l'énergie stockée dans le système de stockage se dégrade au cours du temps, du fait des pertes thermiques dues à une isolation limitée du système de stockage et aux conduites de l'installation.

De ce fait, lors du démarrage de l'installation, il n'est pas facile de garantir un niveau thermique suffisant et d'éviter les chocs thermiques. Or, des chocs thermiques relativement faibles mais à répétition entraînent une fatigue mécanique de l'installation et détériorent son fonctionnement. De plus, des chocs thermiques importants peuvent entraîner la rupture mécanique des éléments constitutifs du système de stockage.

WO 2014/199394 décrit un procédé e stockage de type thermochimique, proposant deux solutions alternatives de chauffage : soit par chaleur sensible, soit par chaleur thermochimique. L'invention a donc pour objet de proposer un procédé d'utilisation d'un dispositif de stockage destiné à une installation de production d'énergie thermique, ayant pour objet de pallier les inconvénients liés au fonctionnement intermittent d'une installation, tout en évitant de faire appel à des énergies non renouvelables.

L'invention concerne un procédé d'utilisation d'un dispositif de stockage suivant l'objet de la revendication 1.

De préférence, le premier système de stockage comporte au moins un étage susceptible d'être endommagé par un choc thermique, cet étage étant préchauffé lors de l'étape de décharge.

Cet étage est un étage de stockage sensible haute température.

De préférence, les températures T1 et T2 sont mesurées au niveau de l'étage de stockage sensible haute température.

La valeur seuil pour la différence de température entre T1 et T2 est avantageusement égale à 200°C.

Dans une première variante de mise en oeuvre de ce procédé, lors de l'étape de charge, les premier et deuxième systèmes de stockage sont chargés simultanément.

Dans une deuxième variante de ce procédé, le deuxième système de stockage commence à être chargé lorsque le premier système de stockage est dans un état complètement chargé.

L'invention sera mieux comprise et d'autres buts, avantages et caractéristiques de celle-ci seront mieux compris à la lecture de la description qui suit et qui est faite au regard des dessins annexés sur lesquels :

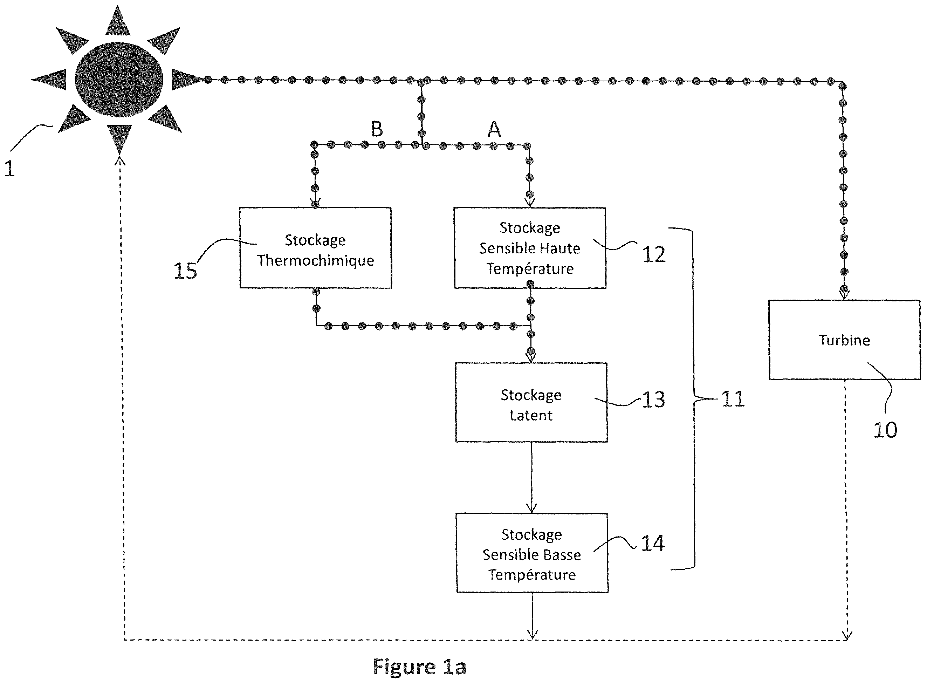

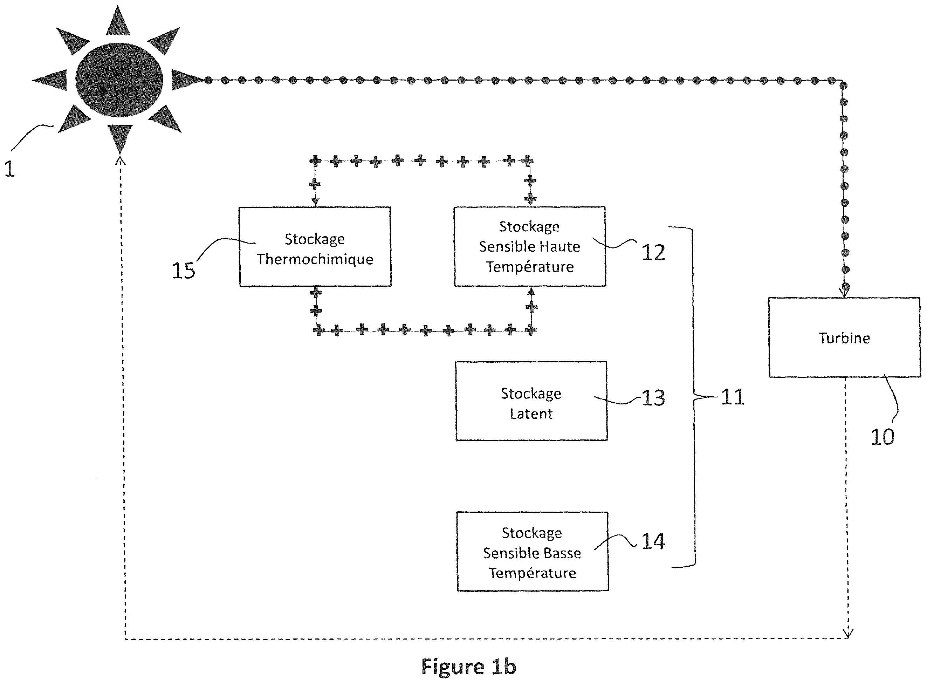

- la figure 1 comprend les figures 1a et 1b, la figure 1a illustrant schématiquement les échanges d'énergie entre l'installation et les différents systèmes de stockage au cours de l'étape de charge des systèmes de stockage et la figure 1b illustrant schématiquement les échanges d'énergie entre l'installation et les différents systèmes de stockage, pendant l'étape de décharge du système de stockage thermochimique vers le système de stockage sensible haute température,

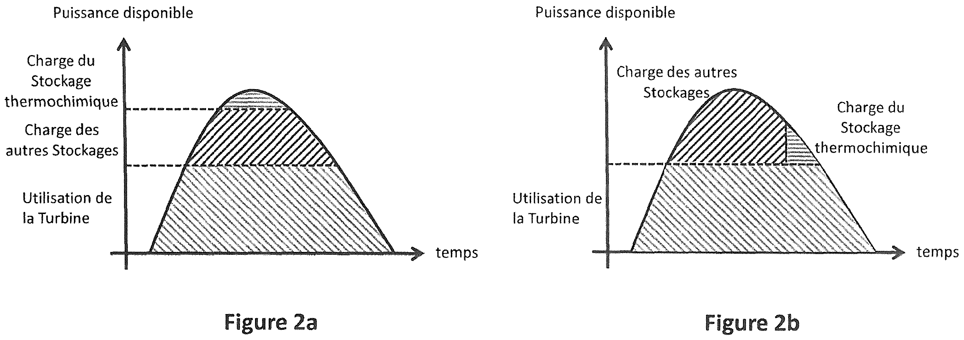

- la figure 2 comprend les figures 2a et 2b ; la figure 2a étant un graphique illustrant la puissance disponible en fonction du temps pour les systèmes de stockage illustrés à la figure 1a, lorsque le système de stockage thermochimique et les autres systèmes de stockage sont chargés simultanément, et la figure 2b est un graphique illustrant la puissance disponible en fonction du temps pour les systèmes de stockage illustrés à la figure 1a, lorsque le système de stockage thermochimique et les autres systèmes de stockage sont chargés successivement

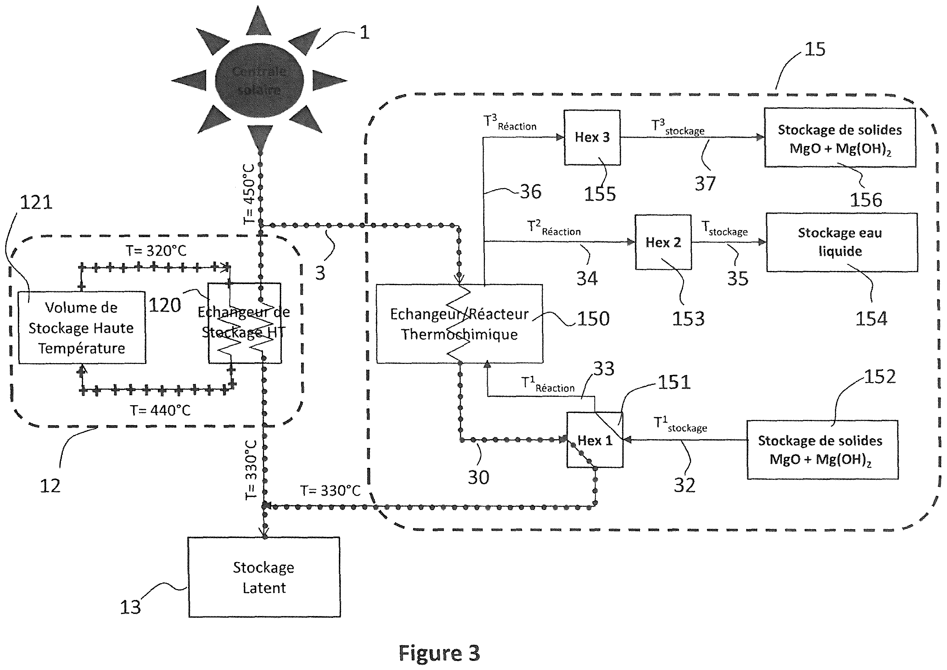

- la figure 3 est un schéma illustrant de façon plus précise un exemple de fonctionnement du dispositif de stockage selon l'invention, au cours de l'étape de charge illustrée à la figure 1a et

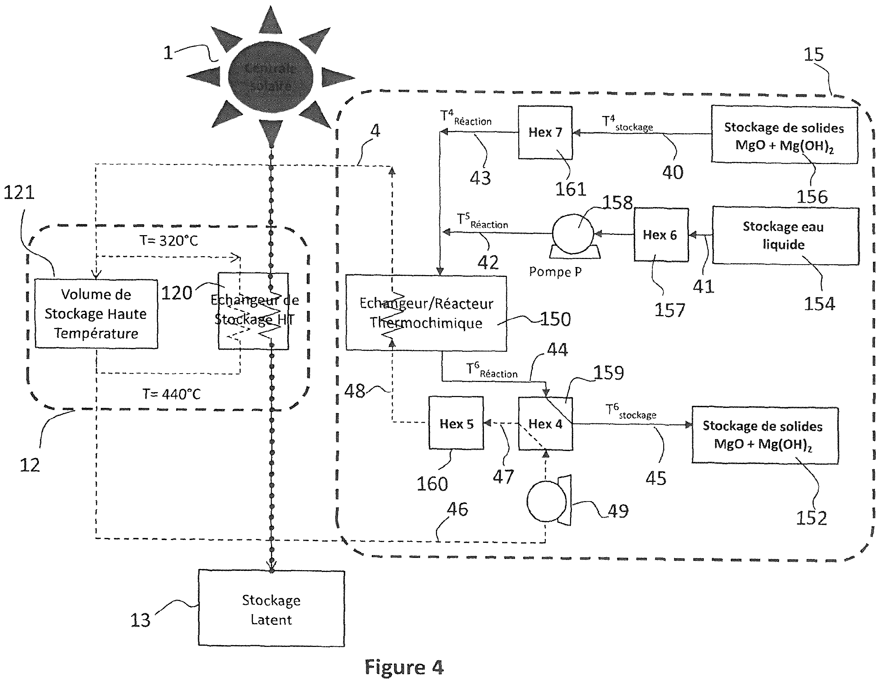

- la figure 4 est un schéma illustrant de façon plus précise le fonctionnement du dispositif de stockage selon l'invention lors de l'étape de décharge correspondant à la figure 1a.

Les éléments communs aux différentes figures seront illustrés par les mêmes références.

La description qui suit est faite pour une installation du type centrale solaire thermodynamique, fournissant de la vapeur d'eau à une température d'environ 450°C, à laquelle est associé un premier système de stockage comprenant un étage de stockage sensible haute température, c'est-à-dire à une température comprise entre 300 et 450°C.

En pratique, un système de stockage par chaleur sensible haute température est un échangeur de chaleur entre un matériau de stockage, par exemple des briques, et un fluide caloporteur, par exemple de l'air chaud. Ce dernier résulte ici de la désurchauffe de la vapeur au sein d'un échangeur vapeur/air en sortie du champ solaire.

Bien entendu, d'autres couples solide/fluide peuvent être utilisés, par exemple béton/air, roche/huile ou roche/air. On peut également utiliser des sels fondus.

Par ailleurs, dans la description qui suit, le premier système de stockage comprend également un système de stockage latent et un système de stockage sensible basse température, le système de stockage latent étant pour la charge en aval du système de stockage sensible haute température et en amont du système de stockage sensible basse température. Le système de stockage latent peut par exemple être composé de sels fondus tandis que le système de stockage sensible basse température peut par exemple être de type thermocline. Il est ici fait référence à l'article de «A. Bruch, J.F. Fourmigué, R. Couturier, Expérimental and numerical investigation of a pilot-scale thermal oil packed bed thermal storage system for CSP power plant, Solar Energy, Volume 105, July 2014, Pages 116-125 ».

Ces deux autres niveaux de stockage pourraient être omis.

En pratique, la vapeur est donc à une température d'environ 450°C en entrée de l'étage sensible haute température et à environ 300°C en sortie. Dans l'étage du stockage latent, la vapeur est condensée à iso-température. Elle est ensuite refroidie sous forme liquide dans l'étage du stockage sensible basse température pour atteindre une température de 160°C.

Par ailleurs, le deuxième système de stockage thermochimique prévu dans le système de stockage selon l'invention pourrait également servir à préchauffer un système de stockage par énergie latente. Cependant, ceci comporterait moins d'intérêt car un système de stockage latent mettant en oeuvre des matériaux à changement de phase est beaucoup moins sensible aux chocs thermiques qu'un moyen de stockage sensible haute température.

Ainsi, le dispositif de stockage selon l'invention comprend un premier système de stockage qui vient d'être décrit ainsi qu'un deuxième système de stockage de type thermochimique.

Un tel dispositif de stockage thermochimique est bien connu dans l'état de la technique. On peut notamment se référer aux documents WO 2011/054676 et US-4054126.

Il présente des avantages par rapport aux systèmes de stockage par énergie sensible ou latente. En particulier, son temps de stockage est illimité et sa densité énergique est 5 à 10 fois plus élevée.

Ainsi, un système de stockage par énergie sensible présente une densité énergétique de 50 kWh/m$^3$, Elle est d'environ 100 kWh/m$^3$ pour un système de stockage par énergie latente et d'environ 500 kWh/m$^3$ pour un système de stockage thermochimique.

A l'intérieur d'un système de stockage thermochimique, se produit une réaction réversible de type A + $\Delta$Hr $\Leftrightarrow$ B + C où $\Delta$Hr correspond à un apport de chaleur dans le sens de la charge et à une production de chaleur lors de la décharge.

Dans une application de stockage de chaleur, le système de stockage thermochimique peut mettre en oeuvre différentes réactions réversibles. A titre d'exemple, deux réactions relèvent de la dissociation catalytique, l'une ($2NH_3$ $\Leftrightarrow$ $N_2 + 3H_2$) correspond à la gamme de températures 400 - 500°C, tandis qu'une autre ($2SO_3 \Leftrightarrow 2SO_2 + O_2$) correspond à la gamme de températures 500-900°C. De même, trois réactions relèvent de la déshydratation d'hydroxyde. L'une ($Mg(OH)_2 \Leftrightarrow MgO + H_2O$) correspond à une gamme de températures comprise entre 150 - 350°C, une autre ($Ca(OH)_2$ $\Leftrightarrow$ $CaO + H_2O$) correspond à une gamme de températures comprise entre 400-600°C, tandis qu'encore une autre ($Ba(OH)_2 \Leftrightarrow BaO + H_2O$) correspond à une gamme de températures comprise entre 700 - 800°C.

D'autres réactions réversibles correspondent à une décarbonatation de carbonates, une réaction REDOX, un réformage de la vapeur ou encore une déshydrogénation d'hydrure métallique.

En pratique, le choix de la réaction réversible mise en oeuvre dans le système de stockage thermochimique est fait en fonction de la plage de température voulue et des contraintes environnementales de l'installation considérée. Par ailleurs, la technologie du système de stockage correspondant est déterminée par la réaction réversible choisie.

La figure 1a illustre schématiquement l'installation 1, ici une centrale solaire. Cette centrale produit de la vapeur qui peut être transmise à une turbine 10 ou tout autre moyen susceptible de produire de l'électricité, au premier système de stockage 11, ainsi qu'au deuxième système de stockage thermochimique 15.

La figure 1a montre que le premier système de stockage 11 comporte un étage de stockage sensible haute température 12 qui est relié à un étage de stockage latent 13, lui-même étant relié à un étage de stockage sensible basse température 14. Le circuit de vapeur est illustré en traits (-•-•-•-) et le circuit d'eau en traits pointillés (- - -).

Le premier système de stockage 11 doit comporter au moins un étage de stockage sensible haute température 12 pour permettre la désurchauffe de la vapeur afin de ramener celle-ci à la température de situation.

Ainsi, lorsque l'installation est en fonctionnement et que les lignes A et B sont alimentées simultanément, le premier système de stockage 11 ainsi que le deuxième système de stockage 15 sont chargés en parallèle, c'est-à-dire simultanément.

En pratique, l'étage de stockage latent et l'étage de stockage sensible basse température peuvent être chargés avant ou en même temps que le moyen de stockage thermochimique.

La figure 2a illustre la puissance disponible en fonction du temps lors de la mise en mouvement de la turbine et de la charge des systèmes de stockage. Cette figure 2a montre que la majeure partie de la charge s'effectue simultanément pour les différents systèmes de stockage.

Lorsque l'installation est en fonctionnement et que les lignes A et B sont alimentées successivement, le premier système de stockage 11 et le deuxième système de stockage 15 thermochimique sont chargés successivement.

Le deuxième système de stockage thermochimique 15 n'est pas ici relié en continu à l'installation 1, mais seulement lorsque les autres types de stockage sont considérés comme chargés.

La figure 2b illustre ainsi la puissance disponible en fonction du temps, au niveau de la turbine et des différents moyens de stockage, à l'issue de l'étape de charge.

Elle confirme que la charge du deuxième système de stockage thermochimique est décalée dans le temps, par rapport aux autres stockages. Cependant, cette charge s'effectue plus rapidement que lorsque le deuxième système de stockage thermochimique est chargé en même temps que les autres moyens de stockage, à quantité égale de matériaux thermochimiques. Ceci est dû au fait que la charge du deuxième système de stockage est réalisée en utilisant l'intégralité du débit de vapeur disponible pour les stockages généré par l'installation 1 et non une partie du débit global de vapeur dédié au stockage.

Lorsqu'un préchauffage de l'étage sensible haute température 12 est nécessaire, notamment après un arrêt prolongé de l'installation, une étape de décharge intervient, le deuxième système de stockage thermochimique 15 fournissant de la chaleur à l'étage de stockage sensible haute température 12.

La figure 1b montre qu'un transfert de chaleur s'effectue entre le deuxième système de stockage 15 et l'étage de stockage sensible haute température 12, lors de la décharge du deuxième moyen de stockage 15, pour assurer le préchauffage de l'étage de stockage sensible haute température.

Le circuit de vapeur est illustré en traits (-•-•-•-•-), le circuit d'eau en traits pointillés (- - - -) et le circuit d'air en traits croisés (++++).

Il est maintenant fait référence à la figure 3 qui illustre schématiquement le fonctionnement du dispositif de stockage selon l'invention, lors de l'étape de charge.

Sur la figure 3, ne sont pas illustrés la turbine 10 ainsi que l'étage de stockage sensible basse température 14.

A titre d'exemple, ce fonctionnement est illustré pour un deuxième système de stockage mettant en oeuvre une déshydratation d'hydroxyde de type $Mg(OH)_2 \Leftrightarrow MgO + H_2O$.

Les caractéristiques de cette réaction sont les suivantes :

- Enthalpie de réaction : 81 kJ/mol
- Conditions de réaction de déshydratation : 300°C à $P_{H2O}$ = 1 bar absolu
- Conditions de réaction d'hydratation : 335°C à $P_{H2O}$ = 55 bar absolu.

L'installation 1, du type centrale solaire, fournit de la vapeur surchauffée à une température d'environ 450°C et à une pression d'environ 115 bar. Le circuit de vapeur est illustré en traits (-•-•-•-•-).

L'étage 12 de stockage sensible haute température comprend un échangeur air / vapeur de l'air 120 et un volume de stockage 121 qui sont représentés de façon indépendante sur la figure 3. En charge, cet échangeur chauffe à environ 400°C l'air issu du volume de stockage sensible haute température.

Cet air chauffé par l'échangeur 120 est ensuite fourni, via la liaison 2, à l'autre extrémité du volume de stockage sensible haute température 121. Le circuit d'air est illustré en traits croisés (++++).

La vapeur surchauffée issue de l'installation est fournie, en parallèle, via la liaison 3, au deuxième moyen de stockage thermochimique 15.

A l'intérieur du deuxième moyen de stockage 15, la vapeur est tout d'abord apportée à un réacteur 150 dans lequel est réalisée la réaction endothermique de déshydratation d'hydroxyde, afin de stocker l'énergie.

La vapeur sort du réacteur 150 par la liaison 30, à une température d'environ 360°C.

La liaison 30 apporte cette vapeur à un échangeur 151 dans lequel les réactifs solides sont préchauffés jusqu'à une température de 300°C.

La vapeur sort de l'échangeur 151 par la liaison 31, par laquelle la vapeur est apportée à l'étage de stockage latent 13. La température de la vapeur est alors de 330°C.

Les réactifs solides préchauffés dans l'échangeur solide/gaz 151 proviennent du moyen de stockage 152. Ces réactifs solides sont fournis à l'échangeur 151 à une température de stockage ($T^1_{stockage}$) par la liaison 32. Cette température $T^1_{stockage}$ peut par exemple être égale à la température ambiante.

En sortie de l'échangeur 151, les réactifs solides préchauffés sont introduits dans le réacteur 150 par la liaison 33 à une température appropriée ($T^1_{réaction}$) qui est de 335°C.

En sortie du réacteur 150, les produits obtenus sont de la vapeur d'eau et un mélange de solides à 300°C.

La vapeur d'eau est apportée à l'échangeur 153 par la liaison 34 à une température de réaction ($T^2_{réaction}$). Elle est alors refroidie et condensée au sein de l'échangeur 153, puis stockée dans le moyen de stockage 154 à une température de stockage ($T^2_{stockage}$), en passant par la liaison 35. Cette température $T^2_{stockage}$ peut par exemple être égale à la température ambiante.

Par ailleurs, le mélange de solides sortant du réacteur est apporté par la liaison 36 à un échangeur 155 à une température de réaction ($T^3_{réaction}$) qui est égale à $T^2_{réaction}$. Le mélange est refroidi dans l'échangeur 155 à une température d'environ 100°C avant d'être stocké dans le moyen de stockage 156 à une température de stockage ($T^3_{stockage}$), en passant par la liaison 37.

Cette température de stockage est d'environ 25°C. Il convient de noter que, dans l'exemple représenté, les fuites de chaleur résultant du refroidissement de 100°C à 25°C de l'eau et des produits solides sont considérées comme perdues.

Lorsque les liaisons A et B entre l'installation 1 et les différents systèmes de stockage, illustrées à la figure 1a, sont actives en même temps, la vapeur issue de l'installation permet de charger en même temps le deuxième étage de stockage 15 et le premier étage de stockage 11.

Lorsque les liaisons A et B sont alimentées successivement, la vapeur issue de l'installation permet de charger tout d'abord le premier étage de stockage 11 (liaison A) puis le deuxième étage de stockage 15 (liaison B).

Il est maintenant fait référence à la figure 4 qui illustre schématiquement le fonctionnement du dispositif de stockage selon l'invention, lors de l'étape de décharge.

Sur la figure 4, ne sont pas illustrés la turbine 10 ainsi que l'étage de stockage sensible basse température 14.

L'installation 1, du type centrale solaire, n'est donc pas encore en fonctionnement et elle ne fournit pas de vapeur à la turbine ou aux différents moyens de stockage. Elle peut également être en phase de redémarrage et fournir de la vapeur. Le circuit de vapeur est illustré en traits (-•-•-•-).

Lors de l'étape de décharge, les réactifs solides sont stockés dans le moyen de stockage 156 à une température de stockage correspondant à la température ambiante.

Dans un premier temps, il est nécessaire de préchauffer ces réactifs solides jusqu'à la température de réaction.

Les réactifs sont donc apportés à l'échangeur 161 par la liaison 40. Les réactifs sont à une température $T^4_{stockage}$. Cet échangeur 161 assurera leur préchauffe par le biais d'une source chaleur externe jusqu'à la température de réaction ($T^3_{réaction}$) qui est d'environ 335°C.

Par ailleurs, l'eau nécessaire à la réaction est présente dans le moyen de stockage 154 à une température de stockage correspondant à la température ambiante. Cette eau est donc fournie par la liaison 41 à l'échangeur 157 par le biais d'une source de chaleur externe qui va assurer sa vaporisation et son surchauffage jusqu'à une température de 335°C.

La vapeur générée dans l'échangeur 157 est compressée au moyen d'une pompe 158 jusqu'à une pression appropriée, ici de l'ordre de 55 bar. Cette vapeur compressée est fournie au réacteur 150 par la liaison 42. Elle est à une température de réaction ($T^3_{réaction}$) de l'ordre de 335°C. On suppose ici que la compression est adiabatique.

Par ailleurs, les réactifs solides préchauffés sont également introduits dans le réacteur 150 par la liaison 43.

Dans la mesure où la vapeur est compressée jusqu'à une pression appropriée, la réaction qui se produit dans le réacteur 150 est réalisée sous une pression de 55 bar afin d'atteindre les niveaux de températures souhaités.

Les produits solides provenant du réacteur 150 sont apportés à une température de réaction ($T^6_{réaction}$), par la liaison 44, à l'échangeur 159.

Le fluide caloporteur, notamment de l'air, apporté par la liaison 46 raccordée à la sortie du volume de stockage haute température 121 de l'étage 12, est réchauffé au sein de l'échangeur 159, par les produits solides sortant du réacteur. Un ventilateur 49 est ici prévu dans la liaison 46.

Les produits solides refroidis sont stockés dans le moyen de stockage 152 auquel ils sont apportés par la liaison 45. Ils sont à une température de stockage ($T^6_{stockage}$).

Par ailleurs, en sortie de l'échangeur 159, le fluide caloporteur préchauffé est apporté, par la liaison 47, à un autre échangeur 160 qui permet de préchauffer l'air jusqu'à 190°C par le biais d'une source de chaleur externe. En sortie de l'échangeur 160, le fluide caloporteur est apporté au réacteur 150 par la liaison 48.

Enfin, le fluide caloporteur est amené, après son passage dans le réacteur 150, en entrée du volume de stockage haute température 121 de l'étage 12, par la liaison 4.

A titre de variante, lors de l'étape de décharge, l'échangeur 160 n'est pas prévu.

Dans ces conditions, le fluide caloporteur entre dans le réacteur 150 à une température égale à celle de la sortie de l'échangeur 159, soit 78°C.

Bien entendu, dans ces conditions, le fluide caloporteur en sortie du réacteur 150 est à une température inférieure puisqu'elle est d'environ 223°C.

La description des figures 3 et 4 a été faite pour un système de stockage thermochimique particulier. Bien entendu, l'invention n'est pas limitée à cet exemple.

Nous allons maintenant nous intéresser au dimensionnement du deuxième moyen de stockage thermochimique pour permettre le fonctionnement du dispositif de stockage selon l'invention, comme décrit en référence aux figures 3 et 4.

Un exemple de ce dimensionnement sera donné pour une centrale solaire à concentration de 1 MWe pouvant fournir de la vapeur surchauffée à 450°C et 115 bar.

Le dimensionnement du premier moyen de stockage est classiquement effectué pour un fonctionnement à l'équinoxe (le 21 mars). A cette époque, la centrale fournit 2,3 kg/s de vapeur surchauffée à la turbine et au premier moyen de stockage.

Lorsque la centrale atteint un fonctionnement nominal, généralement à partir du mois de mai, le débit de vapeur surchauffée peut être égal à 4 kg/s.

Dans ces conditions, à cette époque de l'année, un débit d'environ 1,7 kg/s de vapeur n'est plus stockable pendant environ 4h par jour dans le premier moyen de stockage et peut donc être utilisé pour charger le deuxième moyen de stockage.

Par ailleurs, on considère que le deuxième système de stockage doit être dimensionné afin de pouvoir assurer le préchauffage de l'étage de stockage haute température jusqu'à 300°C, après un arrêt prolongé de la centrale. De plus, cet étage est choisi du type échangeur de chaleur solide/gaz, à l'intérieur duquel des briques de stockage sont balayées par de l'air chaud.

Le système de stockage thermochimique considéré est celui illustré aux figures 3 et 4.

Pour effectuer ce dimensionnement, différentes hypothèses doivent être faites, en ce qui concerne les bilans masses et les bilans enthalpiques.

Les hypothèses 1 à 3 concernent les bilans masses. Hypothèse 1: Le préchauffage, correspondant à l'étape de décharge du stockage thermochimique, s'effectue en 12 heures.

Le stockage thermochimique doit permettre le préchauffage des briques de l'étage de stockage haute température, depuis la température à froid jusqu'à environ 300°C, soit un gradient de température ($\Delta T$) d'environ 280°C.

La puissance à apporter aux matériaux de stockage est donc égale à :

$$M. Cp. \Delta T/t = 25.10^9/43200 \approx 580 \text{ kW}$$

où M est la masse des matériaux de stockage,
Cp est la capacité thermique massique à pression constante des briques du deuxième système de stockage,
$\Delta T$ est le gradient de température
et t le temps de préchauffage.

En conclusion, le système de stockage thermochimique doit être en mesure de fournir une puissance de 580 kW en décharge.

Hypothèse 2: Les taux de conversion pour l'hydratation et la déshydratation sont identiques et égaux à 0.8.

Il est possible de calculer le pourcentage molaire de chacun des solides en fin de cycle après stabilisation, correspondant à environ 7 cycles.

|  | MgO | Mg(OH)$_2$ |
|---|---|---|
| %$_{molaire}$ des solides | 0.17 | 0.83 |

Hypothèse 3 : la charge du deuxième système de stockage thermochimique s'effectue progressivement chaque jour de fonctionnement de la centrale solaire. Le dimensionnement est réalisé sur une base de 5 jours d'ensoleillement consécutifs et un fonctionnement du système de stockage thermochimique durant 4 heures chaque jour. Au final, le système de stockage doit être chargé au bout de 20 heures de fonctionnement, soit une énergie nominale à stocker d'environ 25.10$^9$ J ou encore une puissance de stockage de 348 kW pour une capacité nominale de 25.10$^9$ J.

La résolution des bilans masses des étapes de charge et de décharge du stockage thermochimique permet d'obtenir les débits entrant dans le réacteur 150 du deuxième système de stockage.

| Déshydratation (charge) | | | | | |
|---|---|---|---|---|---|
| MgO | 1.07 | mol.s$^{-1}$ | → | 0.043 | kg.s$^{-1}$ |
| Mg(OH)$_2$ | 5.37 | mol.s$^{-1}$ | → | 0.311 | kg.s$^{-1}$ |
| Hydratation (décharge) | | | | | |
| MgO | 8.95 | mol.s$^{-1}$ | → | 0.358 | kg.s$^{-1}$ |
| Mg(OH)$_2$ | 1.79 | mol.s$^{-1}$ | → | 0.104 | kg.s$^{-1}$ |
| H$_2$O | 7.16 | mol.s$^{-1}$ | → | 0.129 | kg.s$^{-1}$ |

En début de stockage, le réservoir de réactifs thermochimiques 152 doit contenir :

$$m_{\text{stockage thermochimique}} = (5.37+1.07)*20*3600*0.058 \approx 27 \text{ t de Mg(OH)}_2$$

Les résultats ont été obtenus sous l'hypothèse d'un fonctionnement en continu du réacteur 150. En accord avec cette hypothèse, il est possible d'imaginer un réacteur en lit fixe continu ou en lit fluidisé continu (bouillonnant ou circulant). Dans la suite des calculs, la technologie choisie est le lit fixe continu.

Il a été précédemment établi que le système de stockage thermochimique devait être en mesure de fournir 580 kW pendant 12h. L'ensemble des bilans enthalpiques suivants sont donc réalisés en tenant compte de cette contrainte de dimensionnement, lors de l'étape de charge et lors de l'étape de décharge.

Étape de charge: déshydratation du Mg(OH)$_2$ (figure 3)

Durant l'étape de charge, le fluide caloporteur est la vapeur surchauffée à 450°C et à une pression de 115 bar. Le débit potentiel disponible est égal 1.7 kg/s, en accord avec le dimensionnement de la centrale solaire. Dans le cas présent, celui-ci est pris égal à 1.4 kg/s afin de garantir une température de vapeur en sortie du système de stockage thermochimique de 330°C et de permettre son utilisation dans l'étage de stockage latent comme représenté sur la figure 3.

Hypothèse 4 : Dans les calculs qui suivent, il a été considéré que les flux de vapeur et de solides sortant du réacteur 150 peuvent être valorisés jusqu'à une température de 100°C. Dans le cas de la vapeur, il est supposé que la totalité de la condensation est valorisable.

Hypothèse 5 : L'efficacité des échangeurs de chaleur présents dans le système de stockage thermochimique est supposée égale à 0.9.

Le tableau suivant présente les différentes puissances échangées dans les échangeurs 151, 153 et 155 lors de l'étape de charge. La convention de signe indique si l'énergie est fournie au composant considéré (signe +) ou cédée par ce composant (signe -).

| Composant | Puissance échangée | |
|---|---|---|
| Réacteur 150 | 348 | kWth |
| Échangeur 151 | 87 | kWth |
| Échangeur 153 | -212 | kWth |
| Échangeur 155 | -56 | kWth |

Étape de décharge: hydratation du MgO (figure 4)

L'objectif de cette étape est de chauffer le fluide caloporteur nécessaire au préchauffage de l'étage de stockage haute température 12 grâce au système de stockage thermochimique 15. Ici, le fluide caloporteur est donc de l'air à pression atmosphérique. Le débit nominal est égal à 4 kg/s en accord avec le dimensionnement du ventilateur déjà en place. Il est intégré pour permettre la circulation d'air.

Hypothèse 6 : La réaction se fait à une pression de 55 bar. Cela requiert l'installation d'un compresseur pour la vapeur servant à réaliser la réaction (pompe 158).

Le tableau suivant présente les différentes puissances échangées dans les échangeurs 161, 157, 159, 160 et dans la pompe 158, lors de l'étape de décharge.

| Composant | Puissance échangée | |
|---|---|---|
| Réacteur 150 | -580 | kWth |
| Échangeur 159 | 211 | kWth |
| Échangeur 160 | 450 | kWth |
| Échangeur 157 | 403 | kWth |
| Pompe 158 | 364 | kWth |
| Échangeur 161 | 146 | kWth |

Si le dimensionnement choisi permet bien d'apporter au niveau du réacteur 150 (ou encore au matériau de stockage de l'étage de stockage haute température) une puissance de 580 kW, il est également possible de quantifier l'efficacité du système de stockage thermochimique.

Le rendement énergétique est défini de la façon suivante :

Rendement énergétique = Energie déstockée lors de la décharge / (Energie stockée lors de la charge + Energie consommée au cours du procédé - Energie produite au cours du procédé), étant entendu que le procédé comprend les étapes de charge et de décharge.

En déterminant la part d'énergie déstockée par rapport à l'énergie stockée, consommée et valorisée, on aboutit aux valeurs suivantes, selon que les flux de chaleur des produits de réaction soient ou non valorisés.

| | |
|---|---|
| Rendement énergétique avec valorisation des flux de chaleur des produits de réaction | 0,39 |
| Rendement énergétique sans valorisation des flux de chaleur des produits de réaction | 0,3 |
| Densité volumique de stockage pour un produit solide stocké sans tassement | 270k Wh.m$^{-3}$ |

Comme indiqué précédemment, lors de l'étape de décharge, l'échangeur 160 peut être omis.

Le tableau suivant présente les différentes puissances échangées dans les échangeurs 157, 159, 161 et dans la pompe 158, lors de l'étape de décharge, dans cette variante de mise en oeuvre :

| Composant | Puissance échangée | |
|---|---|---|
| Réacteur 150 | -580 | kWth |
| Échangeur 159 | 211 | kWth |
| Échangeur 160 | 0 | kWth |
| Échangeur 157 | 403 | kWth |
| Pompe 158 | 364 | kWth |
| Échangeur 161 | 146 | kWth |

Le rendement énergétique et la densité volumique de stockage correspondant à cette variante sont donnés dans le tableau ci-dessous :

| | |
|---|---|
| Rendement énergétique avec valorisation des flux de chaleur des produits de réaction | 0,55 |
| Rendement énergétique sans valorisation des flux de chaleur des produits de réaction | 0,39 |
| Densité volumique de stockage pour un produit solide stocké sans tassement | 270 kWh.rn$^{-3}$ |

On constate que cette variante présente l'avantage d'améliorer le rendement global du système de stockage thermochimique, bien que la température du fluide caloporteur en sortie du réacteur 150 soit plus faible que dans le mode de réalisation illustré aux figures 3 et 4. Ceci est dû au fait que les pôles de consommation d'énergie sont diminués et notamment la préchauffe de l'air dans l'échangeur 160.

Par ailleurs, il ressort de ce tableau que la densité volumique de stockage est inchangée.

Il ressort de la description qui précède que le dispositif de stockage selon l'invention permet de stocker et de restituer la chaleur avec un débit, une puissance et un niveau de température pratiquement identiques.

Ce dispositif permet de stocker l'énergie thermique d'un fluide caloporteur sur des plages de température comprises entre 100 et 1000°C.

La description qui précède a été faite pour un réacteur du type lit fixe continu. Cependant, l'invention n'est pas limitée à ce type de technologie. Ainsi, dans le cas des réactions gaz/solide, on pourrait utiliser des réacteurs en lit fluidisé bouillonnant ou circulant, ou encore des réacteurs batch en lit fixe ou fluidisé.

Par ailleurs, d'autres réactions qu'une déshydratation d'hydroxyde pourraient être réalisées à l'intérieur du réacteur. Le choix de la réaction a une influence sur la technologie du réacteur et sur les niveaux de température qu'il est possible d'atteindre lors de la préchauffe de l'étage de stockage sensible haute température.

Par ailleurs, toutes sortes de fluides caloporteurs peuvent être utilisées dans le procédé thermochimique. L'air présente un avantage du fait de sa gratuité. On peut également citer, à titre d'exemple, l'eau, vapeur, huile, des sels fondus ou encore un gaz inerte.

Enfin, la principale application de l'invention est le préchauffage d'un système de stockage qui est sensible aux chocs thermiques lors d'arrêts d'une centrale solaire à concentration. Cependant, l'invention peut trouver de nombreuses autres applications, notamment à toute installation présentant une intermittence de fonctionnement et nécessitant un préchauffage avant sa remise en service. A titre d'exemple, le préchauffage peut concerner le circuit eau/vapeur ou le boitier de la turbine.

Les signes de référence insérés après les caractéristiques techniques figurant dans les revendications ont pour seul but de faciliter la compréhension de ces dernières et ne sauraient en limiter la portée.

**Revendications**

**1.** Procédé d'utilisation d'un dispositif de stockage destiné à une installation (1) de production d'énergie thermique ayant un fonctionnement intermittent, comprenant un premier système de stockage (11) par chaleur sensible ou latente destiné à être relié en continu à ladite installation (1) et un deuxième système de stockage (15) thermochimique destiné à être relié, au moins de façon intermittente, à ladite installation et relié au premier système de stockage (11) pour assurer son préchauffage, ledit procédé comprenant :

- une étape de charge du premier (11) et du deuxième (15) systèmes de stockage par l'installation (1) lorsqu'elle est en fonctionnement,
- une étape de décharge du premier système de stockage,
- une étape de détermination de la température (T1) du premier système de stockage (11) à l'issue de l'étape de décharge de ce premier système de stockage,
- une étape de détermination de la température moyenne (T2) du premier système de stockage (11), après l'arrêt de l'installation et avant son redémarrage, et
- une étape de décharge du deuxième système de stockage (15), lorsque la différence entre les températures T1 et T2 est supérieure à une valeur seuil, cette étape de décharge intervenant avant le redémarrage de l'installation pour assurer le préchauffage du premier système de stockage.

**2.** Procédé selon la revendication 1, dans lequel le premier système de stockage (11) comporte au moins un étage susceptible d'être endommagé par un choc thermique, cet étage étant préchauffé lors de l'étape de décharge.

**3.** Procédé selon la revendication 2, dans lequel ledit au moins un étage est un étage de stockage sensible haute température (12).

**4.** Procédé selon la revendication 3, dans lequel les températures T1 et T2 sont mesurées au niveau de l'étage de stockage sensible haute température (12).

**5.** Procédé selon la revendication 4, dans lequel la valeur seuil pour la différence de température entre T1 et T2 est égale à 200°C.

**6.** Procédé selon l'une des revendications 1 à 5 dans lequel, lors de l'étape de charge, le premier (11) et deuxième (15) systèmes de stockage sont chargés simultanément.
Procédé selon l'une des revendications 1 à 5, dans lequel le deuxième système de stockage (15) commence à être chargé (1) lorsque le premier système de stockage (11) est dans un état complètement chargé.

**Patentansprüche**

1. Verfahren zur Verwendung einer Speichervorrichtung, die für eine Wärmeenergieerzeugungsanlage (1) vorgesehen ist, welche einen intermittierenden Betrieb aufweist, umfassend ein erstes System zum Speichern (11) durch fühlbare oder latente Wärme, das dazu vorgesehen ist, kontinuierlich an die Anlage (1) angeschlossen zu sein, und ein zweites thermochemisches Speichersystem (15), das dazu vorgesehen ist, mindestens in intermittierender Weise an die Anlage angeschlossen zu werden, und an das erste Speichersystem (11) angeschlossen zu werden, um dessen Vorerhitzen sicherzustellen, wobei das Verfahren umfasst:

   - einen Schritt des Ladens des ersten (11) und des zweiten (15) Speichersystems durch die Anlage (1), wenn dieselbe in Betrieb ist,
   - einen Schritt des Entladens des ersten Speichersystems,
   - einen Schritt des Bestimmens der Temperatur (T1) des ersten Speichersystems (11) am Ende des Schritts des Entladens dieses ersten Speichersystems,
   - einen Schritt des Bestimmens der Durchschnittstemperatur (T2) des ersten Speichersystems (11) nach dem Abschalten der Anlage und vor deren Wiederanlaufen, und
   - einen Schritt des Entladens des zweiten Speichersystems (15), wenn die Differenz zwischen den Temperaturen T1 und T2 größer als ein Schwellenwert ist, wobei dieser Schritt des Entladens vor dem Wiederanlaufen der Anlage stattfindet, um das Vorerhitzen des ersten Speichersystems sicherzustellen.

2. Verfahren nach Anspruch 1, wobei das erste Speichersystem (11) mindestens eine Stufe umfasst, die von einem thermischen Schock beschädigt werden kann, wobei diese Stufe beim Schritt des Entladens vorerhitzt wird.

3. Verfahren nach Anspruch 2, wobei die mindestens eine Stufe eine hochtemperaturempfindliche Speicherstufe (12) ist.

4. Verfahren nach Anspruch 3, wobei die Temperaturen T1 und T2 im Bereich der hochtemperaturempfindlichen Speicherstufe (12) gemessen werden.

5. Verfahren nach Anspruch 4, wobei der Schwellenwert für die Temperaturdifferenz zwischen T1 und T2 200 °C beträgt.

6. Verfahren nach einem der Ansprüche 1 bis 5, wobei beim Schritt des Ladens das erste (11) und zweite (15) Speichersystem gleichzeitig geladen werden.
Verfahren nach einem der Ansprüche 1 bis 5, wobei das zweite Speichersystem (15) beginnt, geladen zu werden (1), wenn sich das erste Speichersystem (11) in einem vollständig geladenen Zustand befindet.

**Claims**

1. Method for using a storage device intended for a thermal energy production installation (1) functioning intermittently, comprising a first system for storing (11) via sensible or latent heat intended to be connected continuously to said installation (1) and a second thermochemical storage system (15) intended to be connected, at least intermittently, to said installation and connected to the first storage system (11) to ensure its preheating, said method comprising:

   - a step of charging the first (11) and the second (15) storage systems via the installation (1) when it is functioning,
   - a step of discharging the first storage system,
   - a step of determining the temperature (T1) of the first storage system (11) at the end of the step of discharging this first storage system,
   - a step of determining the average temperature (T2) of the first storage system (11), after stopping the installation and before it is restarted, and
   - a step of discharging the second storage system (15), when the difference between the temperatures T1 and T2 is greater than a threshold value, this discharging step occurring before restarting the installation to ensure the preheating of the first storage system.

2. Method according to claim 1, wherein the first storage system (11) comprises at least one level damageable by a thermal shock, this level being preheated during the discharging step.

3. Method according to claim 2, wherein said at least one level is a high-temperature sensitive storage level (12).

4. Method according to claim 3, wherein the temperatures T1 and T2 are measured at the level of the high-temperature sensitive storage level (12).

5. Method according to claim 4, wherein the threshold value for the different in temperature between T1 and T2 is equal to 200°C.

6. Method according to one of claims 1 to 5, wherein during the charging step, the first (11) and second (15) storage systems are charged simultaneously.
Method according to one of claims 1 to 5, wherein the second storage system (15) starts to be charged (1) when the first storage system (11) is in a fully charged state.

Figure 1a

Figure 1b

EP 3 234 353 B1

Figure 2a

Figure 2b

EP 3 234 353 B1

Figure 3

EP 3 234 353 B1

Figure 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014199394 A
- WO 2011054676 A

- US 4054126 A

**Littérature non-brevet citée dans la description**

- **S. RODAT ; A. BRUCH ; N. DUPASSIEUX ; N. EL MOURCHID.** Unique Fresnel demonstrator including ORC and thermocline direct thermal storage: operating experience. *International Conference on Concentrating Solar Power and Chemical Energy Systems, SolarPACES,* 2014

- **A. BRUCH ; J.F. FOURMIGUÉ ; R. COUTURIER.** Expérimental and numerical investigation of a pilot-scale thermal oil packed bed thermal storage system for CSP power plant. *Solar Energy,* Juillet 2014, vol. 105, 116-125